# EUROPÄISCHE PATENTSCHRIFT

(11) **EP 3 931 473 B1**
(45) Veröffentlichungstag und Bekanntmachung des Hinweises auf die Patenterteilung: **03.04.2024**
(21) Anmeldenummer: 20703972.8
(22) Anmeldetag: 04.02.2020
(51) Int. Cl.: F16K 11/044, F16K 31/00, G05D 23/13, F16K 11/00

(54) **MISCHKARTUSCHE MIT WIRBELELEMENT**
MIXING CARTRIDGE WITH VORTEX ELEMENT
CARTOUCHE DE MÉLANGE POURVU D'UN ÉLÉMENT VORTEX

(30) Priorität: 26.02.2019 DE 102019104775
(43) Veröffentlichungstag der Anmeldung: 05.01.2022
(73) Patentinhaber: Grohe AG, 58653 Hemer (DE)
(72) Erfinder: TUESHAUS, Jan Philipp, 58675 Hemer (DE); RIEDEL, Björn, 44879 Bochum (DE); KOSTORZ, Ole Benedikt, 58706 Menden (DE)
(86) Internationale Anmeldenummer: PCT/EP2020/052706
(87) Internationale Veröffentlichungsnummer: WO 2020/173671

(56) Entgegenhaltungen:
- EP-A1- 1 118 049
- EP-A1- 2 407 849
- EP-A1- 3 043 229
- EP-A2- 1 189 127
- WO-A1-97/32147
- WO-A1-2018/077807
- DE-A1-102007 055 455
- JP-A- 2008 202 702
- US-A1- 2008 191 043
- US-A1- 2010 147 963
- US-A1- 2013 099 007

## Beschreibung

Die vorliegende Erfindung betrifft eine Mischkartusche zum Erzeugen von Mischwasser mit einer Mischtemperatur mit einem Warmwassereinlass für Warmwasser, mit einem Kaltwassereinlass für Kaltwasser, mit einer Mischkammer, in der das Warm- und das Kaltwasser gemischt werden, und mit einem Mischwasserauslass, durch den das Mischwasser die Mischkartusche verlassen kann.

Aus der DE 602 03 835 T2 ist eine thermostatische Kartusche zum Mischen von Warm- und Kaltwasser bekannt, wobei in der Kartusche ein Organ zum Erzeugen von Turbulenzen angeordnet ist. Dieses Organ weist an seiner inneren Oberfläche eine unregelmäßige Form auf, mittels dem die Turbulenzen ausgebildet werden, um eine Temperaturhomogenität zwischen dem ausströmenden Mischwasser und einem thermosensiblen Bereich eines Steuerelements zu fördern. Die WO 97/32147 A1 und die US 2013/099007 A1 zeigen Mischkartuschen gemäß dem

### Stand der Technik.

Aufgabe der vorliegenden Erfindung ist es, das Strömungsverhalten in der Kartusche zu verbessern.

Die Aufgabe wird gelöst durch eine Mischkartusche mit den Merkmalen des unabhängigen Patentanspruchs.

Vorgeschlagen wird eine Mischkartusche zum Erzeugen von Mischwasser mit einer Mischtemperatur. Mischkartuschen werden beispielsweise im Sanitärbereich in einem Wasserhahn eingesetzt, um Mischwasser mit einer bestimmten, eingestellten und vorzugsweise konstant gehaltenen Mischtemperatur, beispielsweise zum Duschen, bereitzustellen.

Die Mischkartusche weist einen Warmwassereinlass für Warmwasser und einen Kaltwassereinlass für Kaltwasser auf, wobei in einer Ausführung der Mischkartusche in Abhängigkeit der gewünschten Mischtemperatur durch die Mischkartusche eingestellt werden kann, wieviel Warm- und wieviel Kaltwasser in die Mischkartusche einströmt. Alternativ kann auch in Abhängigkeit der gewünschten Mischtemperatur die entsprechende Menge Warm- und Kaltwasser in die Mischkartusche eingeleitet werden, so dass die Mischkartusche lediglich das Warm- und Kaltwasser mischt. Um das Warm- und das Kaltwasser zu mischen, weist die Mischkartusche eine Mischkammer auf. Diese ist natürlich in Strömungsrichtung des Wassers den beiden Einlässen nachgeordnet, so dass in der Mischkammer das Warmwasser mit dem Kaltwasser zum Mischwasser aufeinander trifft und vermischt wird. In der Mischkammer treffen ferner das Warm- und das Kaltwasser erstmalig aufeinander. Die Mischkammer ist somit der Bereich, ab dem aus dem Warm- und dem Kaltwasser das Mischwasser wird.

Außerdem weist die Mischkartusche einen Mischwasserauslass auf, durch den das Mischwasser die Mischkartusche verlassen kann. Dem Mischwasserauslass kann im Allgemeinen entweder ein Volumenstromregler nachgeordnet sein oder er entlässt das Mischwasser direkt in einen Wasserhahn oder eine Duschbrause bzw. in eine Verbindungsleitung dorthin.

Erfindungsgemäß weist die Mischkartusche zumindest ein Wirbelelement auf, das derart angeordnet und/oder ausgebildet ist, dass das Wasser in Rotation versetzbar ist, so dass das Wasser einen Wasserwirbel ausbilden kann. Das Wasser ist das Warm- und/oder das Kaltwasser bzw. das Mischwasser, wobei dies nicht klar voneinander getrennt werden kann, da der Durchmischungsprozess über einen ausgedehnten Bereich stattfinden kann. Mit Hilfe des Wasserwirbels kann jedoch das Durchmischen des Warm- und Kaltwassers bzw. des bereits teilweise durchmischten Mischwassers verbessert werden. Das Wirbelelement ist somit ein Mischelement. Außerdem ist beim Wasserwirbel die Strömungsrichtung in einem hohen Maße gerichtet, was beispielsweise bei einer turbulenten Strömung weniger der Fall ist, so dass eine Durchströmungsgeschwindigkeit des Wassers durch die Mischkartusche erhöht ist. Ein Strömungsverhalten des Wasserwirbels weist mehr Ähnlichkeit zu einer laminaren Strömung als zu einer turbulenten Strömung auf. Des Weiteren strömt das Wasser mittels des Wasserwirbels ruhiger durch die Mischkartusche als beispielsweise bei einer turbulenten Strömung. Damit verbunden ist auch ein leiseres Durchströmen des Wassers durch die Mischkartusche als bei einem Durchströmen mit Turbulenzen, bei dem Rauschgeräusche auftreten können.

Der Wasserwirbel kann auch als Wasserstrudel beschrieben werden. Das Wasser fließt dabei auf kreisförmigen bzw. gekrümmten Bahnen in Richtung Mischwasserauslass. Das Wasser fließt somit spiralförmig und/oder schraubenlinienförmig, ähnlich wie bei einem Abfluss, zum Mischwasserauslass. Allerdings ist die Mischkartusche vollständig mit Wasser gefüllt, so dass keine trichterförmige Wasseroberfläche ausgebildet wird, wie es vom Abflussstrudel bekannt ist.

Die kreisförmigen bzw. gekrümmten Bahnen des Wassers im Wasserwirbel sind außerdem in einem hohen Maße parallel zueinander, so dass Druckschwankungen im Wasserwirbel vermindert sind. Derartige Druckschwankungen können zu den oben genannten Geräuschentwicklungen führen und belasten die Mischkartusche unregelmäßig, wobei derartige Belastungen im schlimmsten Fall zu Beschädigungen führen können.

Der Wasserwirbel weist ferner eine Drehachse auf, um die sich der Wasserwirbel rotiert bzw. um die sich das Wasser auf der kreisförmigen bzw. gekrümmten Bahn bewegt. Die Drehachse des Wasserwirbels ist ferner parallel zur Strömungsrichtung des Wassers durch die Mischkartusche orientiert.

Von Vorteil ist es, wenn das zumindest eine Wirbelelement in der Mischkammer angeordnet ist, so dass der Wasserwirbel in der Mischkammer ausbildbar ist. Dadurch wird der Wasserwirbel ausgebildet, wenn das Warm- und das Kaltwasser aufeinander getroffen sind, um das Warm- und das Kaltwasser besser zu durchmischen.

Zusätzlich oder alternativ ist es vorteilhaft, wenn das zumindest eine Wirbelelement in Strömungsrichtung nach der Mischkammer angeordnet ist, so dass sich in Strömungsrichtung nach der Mischkammer der Wasserwirbel ausbildet. Dadurch sind das Warm- und das Kaltwasser vollständig aufeinander getroffen, so dass mittels des Wasserwirbels der vollständige Strom aus Warm- und Kaltwasser durchmischt wird.

Von Vorteil ist es auch, wenn das zumindest eine Wirbelelement in Strömungsrichtung nach dem Warmwassereinlass angeordnet ist, so dass im Warmwasser der Wasserwirbel ausbildbar ist. Das zumindest eine Wirbelelement ist somit derart angeordnet, dass es das Kaltwasser nicht zum Wasserwirbel verwirbelt.

Zusätzlich oder alternativ ist es von Vorteil, wenn das zumindest eine Wirbelelement in Strömungsrichtung nach dem Kaltwassereinlass angeordnet ist, so dass im Kaltwasser der Wasserwirbel ausbildbar ist. Das zumindest eine Wirbelelement ist somit derart angeordnet, dass es das Warmwasser nicht zum Wasserwirbel verwirbelt.

Dadurch kann entweder in dem Warmwasser oder in dem Kaltwasser der Wasserwirbel ausgebildet werden, und daraufhin das entsprechend andere Wasser zum Wasserwirbel dazu geleitet werden. Der Wasserwirbel kann dann das entsprechende Wasser ansaugen.

Zusätzlich oder alternativ kann auch, wie oben beschrieben, ein Wasserwirbel im Warmwasser und ein Wasserwirbel im Kaltwasser, insbesondere getrennt voneinander, ausgebildet werden, die dann, beispielsweise in der Mischkammer, aufeinander treffen. Es ist somit zumindest ein Wirbelelement im Warmwasser und zumindest ein Wirbelelement im Kaltwasser angeordnet. Vorteilhaft ist es dabei, wenn diese beiden Wasserwirbel die gleiche Rotationsrichtung aufweisen. Dies kann durch gleich ausgebildete und/oder orientierte Wirbelelemente nach dem Warmwassereinlass und nach dem Kaltwassereinlass erreicht werden.

Vorteilhaft ist es, wenn das zumindest eine Wirbelelement als ein Umlenkelement ausgebildet ist, das das Wasser quer zur Strömungsrichtung ablenken kann. Dadurch kann dem in Strömungsrichtung strömenden Wasser, insbesondere Warm-, Kalt und/oder Mischwasser, ein Impuls in Umfangsrichtung mitgeteilt werden, der zu einem Drehimpuls führt, so dass der Wasserwirbel ausgebildet wird.

Von Vorteil ist es, wenn das zumindest eine Wirbelelement als schräge Fläche ausgebildet ist. Die schräge Fläche kann eine Leitfläche sein, die das Wasser auf eine kreisförmige bzw. gekrümmte Bahn zwingt, so dass der Wasserwirbel ausgebildet wird. Die schräge Fläche kann dabei schraubenlinienförmig ausgebildet sein, so dass die schräge Fläche die Strömungsrichtung des Wasserwirbels vorgibt.

Vorteilhaft ist es auch, wenn das zumindest eine Wirbelelement als eine einseitig offene Tasche ausgebildet ist. Das strömende Wasser trifft in Strömungsrichtung auf die Tasche und kann lediglich auf der geöffneten Seite ausströmen, so dass das Wasser quer zur Strömungsrichtung abgelenkt wird und sich der Wasserwirbel ausbildet.

Von Vorteil ist es, wenn die Mischkartusche mehrere Wirbelelemente aufweist, die in einer Umfangsrichtung der Mischkartusche voneinander beabstandet sind. Dadurch kann der Wasserwirbel besser ausgebildet werden. Von Vorteil ist es zusätzlich oder alternativ, wenn die Mischkartusche mehrere Wirbelelemente aufweist, die in einer Axialrichtung der Mischkartusche voneinander beabstandet sind. Die mehreren Wirbelelemente sind damit auch in Strömungsrichtung des Wassers voneinander beabstandet. Dadurch kann der Wasserwirbel, wenn dieser sich durch die Mischkartusche bewegt, aufrechterhalten werden.

Vorteilhaft ist es, wenn die Wirbelelemente derart schräg zueinander angeordnet sind, dass die Wirbelelemente zueinander parallel zur Strömungsrichtung des Wasserwirbels orientiert sind. Die Wirbelelemente sind dadurch in Richtung von Strömungslinien des Wasserwirbels voneinander beabstandet. Die Strömungslinien des Wasserwirbels treffen dadurch nach einem Wirbelelement direkt auf das nächste Wirbelelement, so dass der Wasserwirbel aufrechterhalten oder sogar verstärkt wird. Die Wirbelelemente sind somit schraubenlinienförmig zueinander angeordnet, wobei sich der Wasserwirbel von Wirbelelement zu Wirbelelement erstreckt.

Erfindungsgemäß weist die Mischkartusche ein Regelelement auf, mittels dem die Mischtemperatur geregelt werden kann, wobei das Regelelement aus einem Wärmedehnungsmaterial ausgebildet ist. Strömt relativ warmes Wasser durch die Mischkartusche, dehnt sich das Regelelement aus, wohingegen sich das Regelelement zusammenzieht, wenn kühleres Wasser durch die Mischkartusche fließt. Mittels der Ausdehnung bzw. dem Zusammenziehen, kann der Zufluss von Warmwasser bzw. Kaltwasser durch den entsprechenden Warmwassereinlass bzw. Kaltwassereinlass geregelt werden.

Vorteilhaft ist es, wenn das zumindest eine Wirbelelement derart angeordnet und/oder ausgebildet ist, dass der Wasserwirbel des Wassers zumindest teilweise in Axialrichtung entlang des Regelelements ausgebildet ist. Da das Regelelement die Mischtemperatur des Mischwassers regelt, ist es für eine schnelle Regelung notwendig, dass das Regelelement so schnell wie möglich die Mischtemperatur des Mischwassers erkennen kann, wobei dies bedeutet, dass das Regelelement selbst die Mischtemperatur annimmt. Mit Hilfe des Wasserwirbels kann das Regelelement schnell an die Mischtemperatur angepasst werden. Beispielsweise kann mit Hilfe des Wasserwirbels eine laminare Strömung um das Regelelement unterbrochen werden, die sich wie eine Schutzhülle um das Regelelement legt und dadurch einen Temperaturausgleich zwischen dem Regelelement und dem Mischwasser verhindert. Die laminare Strömung um das Regelelement unterbricht effektiv den Wärmeenergieübertrag zwischen Regelelement und Mischwasser.

Von Vorteil ist es, wenn das zumindest eine Wirbelelement in einem Ringspalt zwischen dem Regelelement und einem Gehäuse der Mischkartusche angeordnet ist. Dadurch wird der Wasserwirbel in dem Ringspalt ausgebildet. Das Wasser wird zum einen besser durchmischt und der Temperaturausgleich zwischen dem Regelelement und dem Wasser ist verbessert. Der Regelspalt kann auch zwischen dem Regelelement und einem Auslassrohr, das in das Gehäuse eingesetzt oder Teil des Gehäuses ist, ausgebildet sein.

Erfindungsgemäß ist das zumindest eine Wirbelelement am Regelelement angeordnet. Vorteilhaft ist es auch, wenn zumindest ein Wirbelelement am Gehäuse der Mischkartusche angeordnet ist. Wenn das Auslassrohr vorhanden ist, kann das zumindest eine Wirbelelement auch am Auslassrohr angeordnet sein.

Von Vorteil ist es, wenn die Mischkartusche zum Regeln eines Wasserflusses durch den Warmwasser- und Kaltwassereinlass einen Regelschieber aufweist, der vom Regelelement in Axialrichtung der Mischkartusche verschiebbar ist, und dass das zumindest eine Wirbelelement an dem Regelschieber angeordnet ist. Mit Hilfe des Regelschiebers kann der Warmwassereinlass und der Kaltwassereinlass zumindest teilweise geschlossen und geöffnet werden, um entsprechend der einströmenden Menge an Warm- und Kaltwasser die Mischtemperatur des Mischwassers zu regeln.

Weitere Vorteile der Erfindung sind in den nachfolgenden Ausführungsbeispielen beschrieben.

Es zeigen:
- **Figur 1:**: eine Schnittansicht einer Mischkartusche mit Wirbelelementen und
- **Figur 2:**: eine perspektivische Ansicht auf die Wirbelelemente.

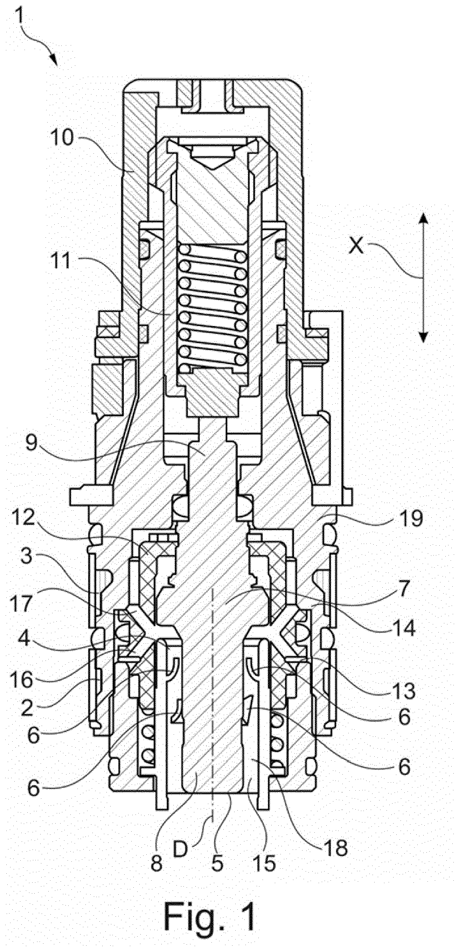

Figur 1 zeigt eine Schnittansicht einer Mischkartusche 1 mit Wirbelelementen 6. Mittels der Mischkartusche 1 kann Mischwasser mit einer Mischtemperatur erzeugt werden und an einer Sanitärarmatur, beispielsweise einem Wasserhahn oder einer Duschbrause, ausgegeben werden.

Die Mischkartusche 1 weist einen Warmwassereinlass 2 für Warmwasser und einen Kaltwassereinlass 3 für Kaltwasser auf, über die das Warm- und das Kaltwasser in die Mischkartusche 1 eingeleitet werden. Ferner weist die Mischkartusche 1 eine Mischkammer 4 auf, in der das Warm- und das Kaltwasser gemischt werden. Die Mischkammer 4 ist in einer Strömungsrichtung des Wassers durch die Mischkartusche 1 den beiden Einlässen 2, 3 nachgeordnet. Die Mischkammer 4 beginnt dort, wo das Warm- und das Kaltwasser aufeinandertreffen. Der Mischkammer 4 ist in Strömungsrichtung des Wassers ein Mischwasserauslass 5 nachgeordnet, durch den das gemischte Wasser mit der Mischtemperatur die Mischkartusche 1 verlässt. Nach dem Mischwasserauslass 5 kann der Wasserhahn oder die Duschbrause angeordnet sein. Ein Mischungsverhältnis sowie die Temperaturen des Warm- und des Kaltwassers bestimmen dabei die Mischtemperatur des Mischwassers.

Um die Mischtemperatur des Mischwassers einstellen zu können, weist die Mischkartusche 1 des vorliegenden Ausführungsbeispiels ein Bedienelement 10 auf. Das Bedienelement 10 ist mittels einer Schraubverbindung mit einem Schraubelement 11 verbunden. Wird das Bedienelement 10 gedreht, wird durch die Schraubverbindung das Schraubelement 11 in einer Axialrichtung X der Mischkartusche 1 bewegt. Die Bewegung des Schraubelements 11 in Axialrichtung X wird auf ein Regelelement 7 übertragen, dass wiederum einen Regelschieber 12 in Axialrichtung X verschieben kann. Je nach Position des Regelschiebers 12 in Axialrichtung X kann es einen Warmwasserregelspalt 13 und einen Kaltwasserregelspalt 14 öffnen und schließen. Je nach Position des Regelschiebers 12 wird eine entsprechende Menge Warmwasser und Kaltwasser in die Mischkartusche 1 durch den Warmwasserregelspalt 13 und den Kaltwasserregelspalt 14 geleitet, woraus das Mischwasser mit der Mischtemperatur gemischt wird. Gemäß dem vorliegenden Ausführungsbeispiel erstrecken sich der Warmwassereinlass 2, der Kaltwassereinlass 3, der Warmwasserregelspalt 13 und der Kaltwasserregelspalt 14 in Umfangsrichtung um die Mischkartusche 1. Die beiden Regelspalte 13, 14 sind dabei in der Mischkartusche 1 angeordnet.

Das Regelelement 7 ist aus einem Wärmeausdehnungsmaterial ausgebildet.

Dadurch dehnt sich das Regelelement 7 insbesondere in Axialrichtung X aus, wenn es erwärmt wird, und zieht sich insbesondere in Axialrichtung X zusammen, wenn es abgekühlt wird.

Dadurch kann das Regelelement 7 das Mischwasser auf einer annähernd konstanten Mischtemperatur halten. Strömt nämlich aus irgendeinem Grund zu viel Warmwasser (oder zu wenig Kaltwasser) in die Mischkartusche 1, erwärmt sich das Regelelement 7 und dehnt sich, wodurch es den Regelschieber 12 in Axialrichtung X in Richtung Mischwasserauslass 5 verschiebt, so dass der Warmwasserregelspalt 13 verkleinert und der Kaltwasserregelspalt 14 vergrößert wird und weniger Warmwasser, jedoch mehr Kaltwasser einströmen kann. Wenn dagegen zu viel Kaltwasser (oder zu wenig Warmwasser) einströmt, zieht sich das Regelelement 7 zusammen, wodurch der Regelschieber 12 vom Mischwasserauslass 5 wegverschoben wird und der Kaltwasserregelspalt 14 verkleinert und der Warmwasserregelspalt 13 vergrößert wird, so dass weniger Kaltwasser, jedoch mehr Warmwasser einströmen kann.

Das Regelelement 7 weist ferner ein erstes Ende 8 auf, dass im Bereich des Mischwasserauslasses 5 angeordnet ist bzw. diesem zugewandt ist. Ein zweites Ende 9 des Regelelements 7 ist dem ersten Ende 8 gegenüberliegend angeordnet und wirkt mit dem Schraubelement 11 zusammen.

Vom Warmwassereinlass 2 bzw. vom Warmwasserregelspalt 13 führt ein Warmwasserkanal 16 zur Mischkammer 4. Vom Kaltwassereinlass 3 bzw. vom Kaltwasserregelspalt 14 führt ein Kaltwasserkanal 17 zur Mischkammer 4. An deren Enden treffen diese aufeinander und vereinigen sich zur Mischkammer 4, da dort das Warmwasser und das Kaltwasser aufeinandertreffen.

Das Wasser in der Mischkartusche 1 strömt somit gemäß der Strömungsrichtung von den beiden Einlässen 2, 3 durch die Mischkammer 4 zum Mischwasserauslass 5.

Des Weiteren weist die Mischkartusche 1 zumindest ein Wirbelelement 6 auf, das derart angeordnet und/oder ausgebildet ist, dass das in Strömungsrichtung durch die Mischkartusche 1 strömende Wasser in Rotation versetzt wird, so dass das Wasser einen Wasserwirbel ausbilden kann. Der Wasserwirbel ist hier nicht gezeigt. Im vorliegenden Ausführungsbeispiel weist die Mischkartusche 1 mehrere Wirbelelemente 6 auf, die der Einfachheit halber und aufgrund ihrer gleichen oder zumindest ähnlichen Wirkung alle mit dem gleichen Bezugszeichen versehen sind.

Der Wasserwirbel weist ferner eine Drehachse D auf, um die er rotiert. Die Drehachse D ist im vorliegenden Ausführungsbeispiel parallel zur Axialrichtung X orientiert. Der Wasserwirbel kann auch als Wasserstrudel beschrieben werden, wie er sich beispielsweise in einem Abfluss ausbilden kann. Der Wasserwirbel rotiert somit um die Drehachse D und strömt dabei in Richtung des Mischwasserauslasses 5. Der Wasserwirbel ist somit schrauben- oder spiralförmig ausgebildet.

Mit Hilfe des Wasserwirbels wird das Strömungsverhalten des Wassers in der Mischkartusche 1 verbessert. Zum einen wird das Durchmischen des Warm- und des Kaltwassers verbessert. Andererseits fließt das Wasser schneller durch die Mischkartusche 1, wenn es in dem Wasserwirbel zum Mischwasserauslass 5 strömt, als wenn es eine turbulente Strömung ausbildet, die einen höheren Strömungswiderstand aufweist. Außerdem fließt das Wasser in Gestalt des Wasserwirbels ruhiger durch die Mischkartusche 1 als wenn es turbulent strömt. Turbulente Strömungen bilden ferner Rauschgeräusche aus, die durch den Wasserwirbel verhindert werden können.

Des Weiteren kann ein Temperaturausgleich zwischen dem im Wasserwirbel strömenden Mischwasser und dem Regelelement 7, insbesondere dem ersten Ende 8 des Regelelements 7, verbessert werden, da der Wasserwirbel eine laminare Strömung um das Regelelement 7, insbesondere des ersten Endes 8, verhindert, die sich wie eine Schutzhülle um das Regelelement 7 legt. Dadurch kann das Regelelement 7 schneller auf Temperaturschwankungen des Mischwassers reagieren. Das erste Ende 8 des Regelelements 7 ist vorteilhafterweise der Bereich, der auf die Temperaturschwankung reagiert.

Gemäß dem vorliegenden Ausführungsbeispiel ist das zumindest eine Wirbelelement 6 an einem Auslassrohr 15 der Mischkartusche 1 angeordnet.

Des Weiteren ist hier das zumindest eine Wirbelelement 6 in einem Ringspalt 18 zwischen dem Regelelement 7, insbesondere dem ersten Ende 8 des Regelelements 7, und dem Auslassrohr 15 angeordnet. Zusätzlich oder alternativ kann das zumindest eine Wirbelelement 6 auch zwischen dem Regelelement 7 und einem Gehäuse 19 der Mischkartusche 1 angeordnet sein.

Der Ringspalt 18 des vorliegenden Ausführungsbeispiels oder im Allgemeinen der Raum, in dem sich der Wasserwirbel ausbildet, ist zylinderförmig ausgebildet. Der Ringspalt 18 bzw. der Raum für den Wasserwirbel ist somit, wie auch der Wasserwirbel, rotationssymmetrisch.

Erfindungsgemäß ist das zumindest eine Wirbelelement 6 an dem Regelelement 7 angeordnet. Zusätzlich kann zumindest ein Wirbelelement 6 auch in der Mischkammer 4, in dem Warmwasserkanal 16 und/oder in dem Kaltwasserkanal 17 angeordnet sein.

Des Weiteren kann die Mischkartusche 1, wie hier gezeigt ist, mehrere Wirbelelemente 6 aufweisen. Diese sind in Umfangsrichtung voneinander, insbesondere um das Regelelement 7, beabstandet angeordnet, so dass der Wasserwirbel effektiver ausgebildet wird. Gemäß dem vorliegenden Ausführungsbeispiel sind weitere Wirbelelemente 6 in Axialrichtung X voneinander beabstandet angeordnet, so dass der Wasserwirbel bei der Strömung in Richtung Mischwasserauslass 5 weiter in Rotation versetzt wird.

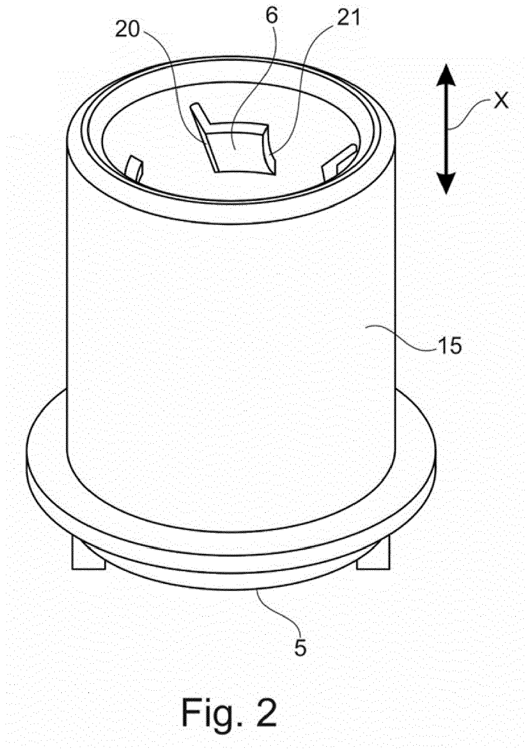

Figur 2 zeigt eine perspektivische Ansicht auf mehrere Wirbelelemente 6. Die Wirbelelemente 6 sind hier im Auslassrohr 15 angeordnet, wobei dies hier nur als Beispiel dient. Die Wirbelelemente 6 könnten auch an dem Regelelement 7, im Warmwasserkanal 16, im Kaltwasserkanal 17, in der Mischkammer 4 und/oder am Gehäuse 19 angeordnet sein.

Gemäß dem vorliegenden Ausführungsbeispiel sind die Wirbelelemente 6 als Taschen ausgebildet. Die Tasche weist eine geschlossene Seite 20 und eine geöffnete Seite 21 auf. Das strömende Wasser trifft nun auf die Tasche und kann dabei lediglich auf der geöffneten Seite 21 der Tasche wieder ausströmen, wobei das Wasser in Rotation versetzt wird. Diese Rotation und die Überlagerung mit der Strömungsrichtung des Wassers in Richtung Mischwasserauslass 5 führt zum Wasserwirbel oder Wasserstrudel, der sich in Richtung Mischwasserauslass 5 dreht. Strömungslinien des Wasserwirbels sind somit schräg orientiert, das heißt, sie weisen Komponenten in Umfangsrichtung und in Axialrichtung X bzw. in Richtung Mischwasserauslass 5 auf.

Gemäß dem vorliegenden Ausführungsbeispiel strömt der Wasserwirbel in Blickrichtung der Strömungsrichtung des Wassers, was hier einer Blickrichtung von oben auf das Auslassrohr 15 entspricht, in Uhrzeigerrichtung bzw. im Uhrzeigersinn. In Blickrichtung auf den Mischwasserauslass 5, also bei einem Blick von unten auf das Auslassrohr 15, strömt der Wasserwirbel gegen die Uhrzeigerrichtung bzw. gegen den Uhrzeigersinn. Wenn die Wirbelelemente 6 anders herum angeordnet werden, kann der Drehsinn des Wasserwirbels natürlich umgedreht werden.

Zusätzlich oder alternativ kann das zumindest eine Wirbelelement 6 auch als schräge Fläche ausgebildet sein. Das Wirbelelement 6 ähnelt dann einer feststehenden Turbinenschaufel. Zusätzlich oder alternativ kann das zumindest eine Wirbelelement 6 auch als Propellerblatt ausgebildet sein, das gegenüber der Mischkartusche 1 feststeht.

Die vorliegende Erfindung ist nicht auf die dargestellten und beschriebenen Ausführungsbeispiele beschränkt. Abwandlungen im Rahmen der Patentansprüche sind möglich.

### Bezugszeichenliste

- 1: Mischkartusche
- 2: Warmwassereinlass
- 3: Kaltwassereinlass
- 4: Mischkammer
- 5: Mischwasserauslass
- 6: Wirbelelement
- 7: Regelelement
- 8: erste Ende
- 9: zweites Ende
- 10: Bedienelement
- 11: Schraubelement
- 12: Regelschieber
- 13: Warmwasserregelspalt
- 14: Kaltwasserregelspalt
- 15: Auslassrohr
- 16: Warmwasserkanal
- 17: Kaltwasserkanal
- 18: Ringspalt
- 19: Gehäuse
- 20: geschlossene Seite
- 21: geöffnete Seite
- X: Axialrichtung
- D: Drehachse

## Patentansprüche

1. Mischkartusche (1) zum Erzeugen von Mischwasser mit einer Mischtemperatur
mit einem Warmwassereinlass (2) für Warmwasser,
mit einem Kaltwassereinlass (3) für Kaltwasser,
mit einer Mischkammer (4), in der das Warm- und das Kaltwasser gemischt werden können,
mit einem Regelelement (7), mittels dem die Mischtemperatur geregelt werden kann, wobei das Regelelement (7) aus einem Wärmeausdehnungsmaterial ausgebildet ist, und
mit einem Mischwasserauslass (5), durch den das Mischwasser die Mischkartusche (1) verlassen kann,
wobei die Mischkartusche (1) zumindest ein Wirbelelement (6) aufweist,
das derart angeordnet und/oder ausgebildet ist, dass das in einer Strömungsrichtung durch die Mischkartusche strömende Wasser in Rotation versetzbar ist, so dass das Wasser einen Wasserwirbel ausbilden kann,
**dadurch gekennzeichnet, dass**
das zumindest eine Wirbelelement (6) am Regelelement (7) angeordnet ist.

2. Mischkartusche nach dem vorherigen Anspruch, **dadurch gekennzeichnet, dass** das zumindest eine Wirbelelement (6) in der Mischkammer (4) angeordnet ist, so dass der Wasserwirbel in der Mischkammer (4) ausbildbar ist, und/oder
dass das zumindest eine Wirbelelement (6) in Strömungsrichtung nach der Mischkammer (6) angeordnet ist, so dass in Strömungsrichtung nach der Mischkammer (4) der Wasserwirbel ausgebildet werden kann.

3. Mischkartusche nach einem oder mehreren der vorherigen Ansprüche, **dadurch gekennzeichnet, dass** das zumindest eine Wirbelelement (6) in Strömungsrichtung nach dem Warmwassereinlass (2) angeordnet ist, so dass im Warmwasser der Wasserwirbel ausbildbar ist, und/oder
dass das zumindest eine Wirbelelement (6) in Strömungsrichtung nach dem Kaltwassereinlass (3) angeordnet ist, so dass im Kaltwasser der Wasserwirbel ausbildbar ist.

4. Mischkartusche nach einem oder mehreren der vorherigen Ansprüche, **dadurch gekennzeichnet, dass** das zumindest eine Wirbelelement (6) als ein Umlenkelement ausgebildet ist, das das Wasser quer zur Strömungsrichtung ablenken kann.

5. Mischkartusche nach einem oder mehreren der vorherigen Ansprüche, **dadurch gekennzeichnet, dass** das zumindest eine Wirbelelement (6) als schräge Fläche ausgebildet ist.

6. Mischkartusche nach einem oder mehreren der vorherigen Ansprüche, **dadurch gekennzeichnet, dass** das zumindest eine Wirbelelement (6) als eine einseitig offene Tasche ausgebildet ist.

7. Mischkartusche nach einem oder mehreren der vorherigen Ansprüche, **dadurch gekennzeichnet, dass** die Mischkartusche (1) mehrere Wirbelelemente (6) aufweist, die in einer Umfangsrichtung und/oder in Axialrichtung (X) der Mischkartusche (1) voneinander beabstandet sind.

8. Mischkartusche nach einem oder mehreren der vorherigen Ansprüche, **dadurch gekennzeichnet, dass** die Wirbelelemente (6) derart schräg zueinander angeordnet sind, dass die Wirbelelemente (6) zueinander parallel zur Strömungsrichtung des Wasserwirbels orientiert sind.

9. Mischkartusche nach einem oder mehreren der vorherigen Ansprüche, **dadurch gekennzeichnet, dass** das zumindest eine Wirbelelement (6) derart angeordnet und/oder ausgebildet ist, dass der Wasserwirbel des Wassers zumindest teilweise in Axialrichtung (X) entlang des Regelelements (7) ausgebildet ist.

10. Mischkartusche nach einem oder mehreren der vorherigen Ansprüche, **dadurch gekennzeichnet, dass** das zumindest eine Wirbelelement (6) in einem Ringspalt (18) zwischen dem Regelelement (7) und einem Gehäuse (19), insbesondere einem Auslassrohr (15), der Mischkartusche (1) angeordnet ist.

11. Mischkartusche nach einem oder mehreren der vorherigen Ansprüche, **dadurch gekennzeichnet, dass** zumindest ein Wirbelelement (6) am Gehäuse (19), insbesondere einem Auslassrohr (15), der Mischkartusche (1) angeordnet ist.

12. Mischkartusche nach einem oder mehreren der vorherigen Ansprüche, **dadurch gekennzeichnet, dass** die Mischkartusche (1) zum Regeln eines Wasserflusses durch den Warmwasser- und Kaltwassereinlass (2, 3) einen Regelschieber (12) aufweist, der vom Regelelement (7) in Axialrichtung (X) der Mischkartusche (1) verschiebbar ist, und dass das zumindest eine Wirbelelement (6) an dem Regelschieber (12) angeordnet ist.

## Claims

1. A mixing cartridge (1) for generating mixed water with a mixing temperature, having a hot water inlet (2) for hot water,
having a cold water inlet (3) for cold water,
having a mixing chamber (4) in which the hot and cold water can be mixed,
having a regulating element (7) by means of which the mixing temperature can be regulated,
wherein the regulating element (7) is made of a thermal expansion material,
and
having a mixed water outlet (5) through which the mixed water can leave the mixing cartridge (1),
wherein the mixing cartridge (1) has at least one vortex element (6),
which is arranged and/or configured in such a manner that the water flowing in a flow direction through the mixing cartridge can be set in rotation such that the water can form a water vortex,
**characterized in that**
the at least one vortex element (6) is arranged on the regulating element (7).

2. The mixing cartridge according to the preceding claim, **characterized in that** the at least one vortex element (6) is arranged in the mixing chamber (4) such that the water vortex can be formed in the mixing chamber (4), and/or
**in that** the at least one vortex element (6) is arranged in the flow direction downstream of the mixing chamber (6) such that the water vortex can be formed in the flow direction downstream of the mixing chamber (4).

3. The mixing cartridge according to one or more of the preceding claims, **characterized in that** the at least one vortex element (6) is arranged in the flow direction downstream of the hot water inlet (2) such that the water vortex can be formed in the hot water, and/or
**in that** the at least one vortex element (6) is arranged in the flow direction downstream of the cold water inlet (3) such that the water vortex can be formed in the cold water.

4. The mixing cartridge according to one or more of the preceding claims, **characterized in that** the at least one vortex element (6) is configured as a deflection element which can divert the water transverse to the flow direction.

5. The mixing cartridge according to one or more of the preceding claims, **characterized in that** the at least one vortex element (6) is configured as an inclined surface.

6. The mixing cartridge according to one or more of the preceding claims, **characterized in that** the at least one vortex element (6) is configured as a pocket which is open on one side.

7. The mixing cartridge according to one or more of the preceding claims, **characterized in that** the mixing cartridge (1) has multiple vortex elements (6) which are spaced apart from one another in a circumferential direction and/or in an axial direction (X) of the mixing cartridge (1).

8. The mixing cartridge according to one or more of the preceding claims, **characterized in that** the vortex elements (6) are inclined towards one another in such a manner that the vortex elements (6) are oriented to one another in parallel to the flow direction of the water vortex.

9. The mixing cartridge according to one or more of the preceding claims, **characterized in that** the at least one vortex element (6) is arranged and/or configured in such a manner that the water vortex of the water is formed at least partially in an axial direction (X) along the regulating element (7).

10. The mixing cartridge according to one or more of the preceding claims, **characterized in that** the at least one vortex element (6) is arranged in an annular gap (18) between the regulating element (7) and a housing (19), in particular an outlet pipe (15), of the mixing cartridge (1).

11. The mixing cartridge according to one or more of the preceding claims, **characterized in that** the at least one vortex element (6) is arranged on the housing (19), in particular on an outlet pipe (15), of the mixing cartridge (1).

12. The mixing cartridge according to one or more of the preceding claims, **characterized in that** the mixing cartridge (1) has a gate valve (12) that can be moved by the regulating element (7) in an axial direction (X) of the mixing cartridge (1) for regulating a flow of water through the hot water and cold water inlets (2, 3), and **in that** the at least one vortex element (6) is arranged on the gate valve (12).

## Revendications

1. Cartouche mitigeuse (1), destinée à produire de l'eau mitigée à une température de mélange,
pourvue d'une entrée (2) d'eau chaude pour de l'eau chaude,
pourvue d'une entrée (3) d'eau froide pour de l'eau froide,
pourvue d'une chambre de mélange (4), dans laquelle l'eau chaude et l'eau froide peuvent être mélangées,
pourvue d'un élément de réglage (7), au moyen duquel la température de mélange peut se régler,
l'élément de réglage (7) étant conçu en une matière à dilatation thermique,
et
pourvue d'une sortie (5) d'eau mitigée, à travers laquelle l'eau mitigée peut quitter la cartouche mitigeuse (1),
la cartouche mitigeuse (1) comportant au moins un élément vortex (6),
qui est placé et / ou conçu de telle sorte que de l'eau circulant dans une direction d'écoulement à travers la cartouche mitigeuse puisse être amenée en rotation, de telle sorte que l'eau puisse constituer un tourbillon d'eau,
**caractérisée en ce que**
l'au moins un élément vortex (6) est placé sur l'élément de réglage (7).

2. Cartouche mitigeuse selon la revendication précédente, **caractérisée en ce que** l'au moins un élément vortex (6) est placé dans la chambre de mélange (4), de telle sorte que le tourbillon d'eau puisse se constituer dans la chambre de mélange (4), et / ou
**en ce que** l'au moins un élément vortex (6) est placé en aval de la chambre de mélange (6) dans la direction d'écoulement, de sorte que le tourbillon d'eau puisse se constituer en aval de la chambre de mélange (4) dans la direction d'écoulement.

3. Cartouche mitigeuse selon l'une quelconque ou plusieurs des revendications précédentes, **caractérisée en ce que** l'au moins un élément vortex (6) est placé en aval de l'entrée (2) d'eau chaude dans la direction d'écoulement, de sorte que le tourbillon d'eau puisse se constituer dans l'eau chaude, et / ou
**en ce que** l'au moins un élément vortex (6) est placé en aval de l'entrée (3) d'eau froide dans la direction d'écoulement, de telle sorte que le tourbillon d'eau puisse se constituer dans l'eau froide.

4. Cartouche mitigeuse selon l'une quelconque ou plusieurs des revendications précédentes, **caractérisée en ce que** l'au moins un élément vortex (6) est constitué sous la forme d'un élément de renvoi, susceptible de détourner l'eau à la transversale de la direction d'écoulement.

5. Cartouche mitigeuse selon l'une quelconque ou plusieurs des revendications précédentes, **caractérisée en ce que** l'au moins un élément vortex (6) est constitué sous la forme d'une surface oblique.

6. Cartouche mitigeuse selon l'une quelconque ou plusieurs des revendications précédentes, **caractérisée en ce que** l'au moins un élément vortex (6) est conçue sous la forme d'une poche ouverte sur un côté.

7. Cartouche mitigeuse selon l'une quelconque ou plusieurs des revendications précédentes, **caractérisée en ce que** la cartouche mitigeuse (1) comporte plusieurs éléments vortex (6) qui sont écartés les uns des autres dans une direction périphérique et / ou dans la direction axiale (X) de la cartouche mitigeuse (1) .

8. Cartouche mitigeuse selon l'une quelconque ou plusieurs des revendications précédentes, **caractérisée en ce que** les éléments vortex (6) sont placés en oblique les uns par rapport aux autres, de telle sorte que les éléments vortex (6) soient orientés les uns par rapport aux autres à la parallèle de la direction d'écoulement du tourbillon d'eau.

9. Cartouche mitigeuse selon l'une quelconque ou plusieurs des revendications précédentes, **caractérisée en ce que** l'au moins un élément vortex (6) est placé et / ou conçu de telle sorte que le tourbillon d'eau de l'eau soit conçu au moins partiellement dans la direction axiale (X), le long de l'élément de réglage (7) .

10. Cartouche mitigeuse selon l'une quelconque ou plusieurs des revendications précédentes, **caractérisée en ce que** l'au moins un élément vortex (6) est placé dans une fente annulaire (18) entre l'élément de réglage (7) et un corps (19), notamment un tube de sortie (15) de la cartouche mitigeuse (1).

11. Cartouche mitigeuse selon l'une quelconque ou plusieurs des revendications précédentes, **caractérisée en ce qu'**au moins un élément vortex (6) est placé sur le corps (19), notamment un tube de sortie (15) de la cartouche mitigeuse (1).

12. Cartouche mitigeuse selon l'une quelconque ou plusieurs des revendications précédentes, **caractérisée en ce que** pour régler un flux d'eau à travers l'entrée d'eau chaude et d'eau froide (2, 3), la cartouche mitigeuse (1) comporte un registre de réglage (12) qui est déplaçable par l'élément de réglage (7) dans la direction axiale (X) de la cartouche mitigeuse (1) et **en ce que** l'au moins un élément vortex (6) est placé sur le registre de réglage (12).
